# EUROPEAN PATENT SPECIFICATION

(11) **EP 2 374 345 B1**
(45) Date of publication and mention of the grant of the patent: **30.08.2017**
(21) Application number: 11161424.4
(22) Date of filing: 07.04.2011
(51) Int. Cl.: A01D 46/26

(54) **Beating apparatus, particularly for beating olives and the like**
Schlagvorrichtung, insbesondere zum Schlagen von Oliven und dergleichen
Batteur, en particulier pour battre les olives et similaire

(30) Priority: 09.04.2010 IT PD20100115
(43) Date of publication of application: 12.10.2011
(73) Proprietor: Zanon S.R.L., 35011 Campodarsego PD (IT)
(72) Inventor: Zanon, Franco, 35011 Campodarsego (PD) (IT)
(74) Representative: Modiano, Micaela Nadia

(56) References cited:
- EP-A1- 1 040 747
- EP-A2- 1 621 063
- WO-A1-2004/047517
- WO-A1-2008/000860
- ES-A2- 2 076 119
- FR-A1- 2 860 387
- GB-A- 2 202 724
- US-A- 3 174 269
- US-A- 3 575 015

## Description

The present invention relates to a beating apparatus, particularly for beating olives and the like.

Beating is a historically known operation aimed at causing the fruits of a plant to fall so that they can be gathered.

Beating methods generally provide for an operation of shaking the branches of the plant in order to cause the detachment of their fruits.

This shaking is performed with the aid of tools which can be simple sticks or rakes or apparatuses dedicated to this purpose, such as modem beating devices.

These devices have, at a working end of an elongated handle, devices provided with rods moved by a motor.

The operator inserts the moving rods among the branches of the plant, so that said rods shake them and possibly beat them, causing their fruits to fall.

Various kinds of beating apparatus are currently known, some of which have a disk-like head which is supported by the working end of the handle and supports perimetrically rods which rotate along a conical path.

EP 1621063 A2 discloses a tool for beating olives or other similar agricultural products, comprising two mutually opposite oscillating sectors articulated to a supporting body, a corresponding series of rods being fixed in a rack-like configuration to each sector. Both oscillating sectors are connected to oscillation actuation means. The tool comprises means for the kinematic connection of the oscillation actuation means to an electric motor drive, which is rigidly coupled to a maneuvering pole.

WO 2008/000860 A1 discloses a device comprising a base support at one end of a boom with an actuator member arranged and actuated in order to perform an actuation movement with respect to a
longitudinal shaft of the boom. In said base support there is mounted at least one comb for a first oscillating movement with respect to at least one first shaft, and this first shaft is mounted on said base support in order to perform a second oscillating movement with respect to a second shaft supported in a fixed position. A movement-transmission mechanism arranged in connection with the actuator member and with said first shaft is adapted to convert the actuation movement of the actuator member into a combined oscillating movement of the comb with respect to the first and second shafts.

WO 2004/047517 A1 discloses an olives and coffee beans harvester comprising a finger prop, with fingers that throws fruits into a receptacle, mounted onto the receptacle. On the finger prop there are axles to connect with a battery-driven, motor-driven or hydraulic drive that provides required vibrations by horizontal oscillating movements. A slide joint, to which a telescopic stick of adjustable length is attached, enables the change of angle and height during the harvest. An elastic connection between fingers, provided by means of springs, enables easy passage of fingers through the offshoots, and efficient harvesting of pure fruits.

Another currently known apparatus has, at the working end of the handle, a pair of oscillating sectors which are rake-shaped and are pivoted symmetrically on opposite sides of the working end.

Motor means actuate the symmetrical oscillation of the oscillating sectors, which, when they are inserted among the branches of a plant, shake them and furthermore allow, thanks to their rake-like shape, a combing operation, to the full advantage of a quick and effective beating of the fruits.

In one currently known model of beating apparatus, said motor means comprise an electric motor which is supported at the end of the handle that lies opposite its working end, and a mechanical transmission which, by passing inside the handle, functionally connects the motor to a piston device which actuates the symmetrical oscillation of the oscillating sectors.

Although it is currently highly appreciated, this apparatus has aspects that can be improved.

When both oscillating sectors operate simultaneously on a branch, due to their symmetrical oscillation the operation of one of said sectors in fact contrasts the operation of the other one, so as to inhibit the shaking effect on the branch.

In the field of beating, therefore, the need is currently felt for apparatuses that allow effective shaking of the branches while avoiding their damage by friction or percussion.

One currently known solution, devised to meet this need, is a beating apparatus which comprises
- an elongated handle provided, at a working end, with a supporting body to which two oscillating sectors provided with beating rods are articulated,
- two linkages, which functionally connect a crank element to the oscillating sectors so as to impart thereto, during use, an oscillating motion.

The crank element is actuated by an electric motor which is supported by the supporting body.

This beating apparatus allows effective shaking of the branches on which it operates, avoiding thereon an antagonistic action of the beating rods thanks to their offset oscillating motion, which is ensured by actuation by the two linkages moved simultaneously by the crank element.

In the broader field of apparatuses for orchard maintenance and care, however, another important need is felt which consists in reducing the number and complexity of the tools in order to contain tool purchase and maintenance costs and the costs related to their storage when they are not in use.

The aim of the present invention is to provide a beating apparatus, particularly for beating olives, that meets this need and is structurally simpler and more compact than currently known beating devices.

Within this aim, an object of the invention is to propose a beating apparatus that can be integrated with a motor device that may even not be dedicated expressly to it in order to be actuated by it.

Another object of the invention is to provide a beating apparatus that makes it possible to provide a synergy of components with other tools commonly used in the field of orchard care and more generally in the field of agricultural and forestry activities.

Another object of the invention is to propose a beating apparatus that is simple and easy to use and can be manufactured at relatively low cost.

This aim, as well as these and other objects which will become better apparent hereinafter, are achieved by a beating apparatus, particularly for beating olives and the like, according to claim 1.

Further characteristics and advantages of the invention will become better apparent from the description of a preferred but not exclusive embodiment of the beating apparatus according to the invention, illustrated by way of non-limiting example in the accompanying drawings, wherein:

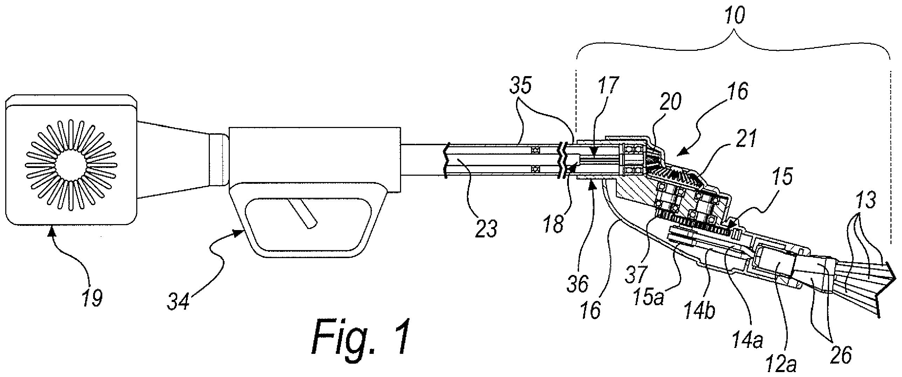

Figure 1 is a partially sectional lateral elevation view of a beating apparatus in a configuration for use, according to the invention;

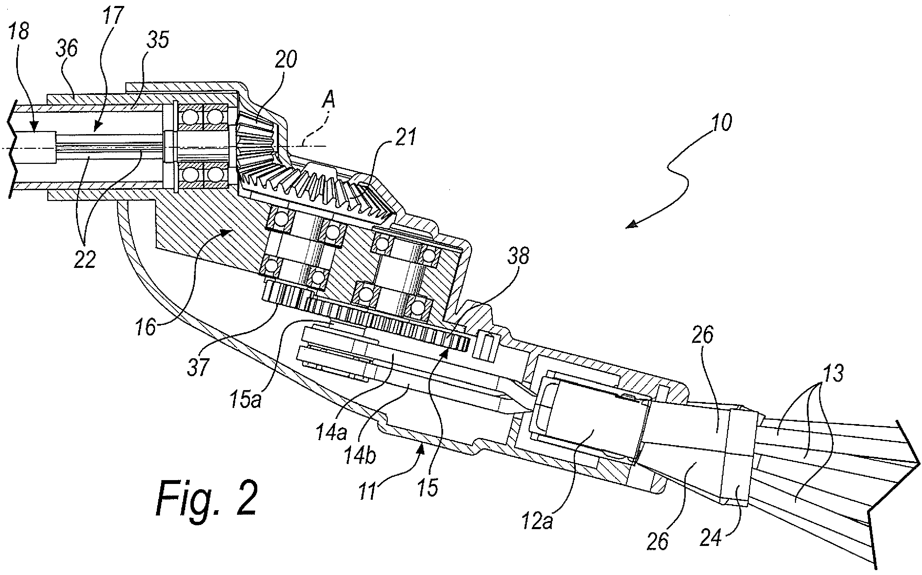

Figure 2 is a partially sectional enlarged-scale view of a detail of a beating apparatus, according to the invention;

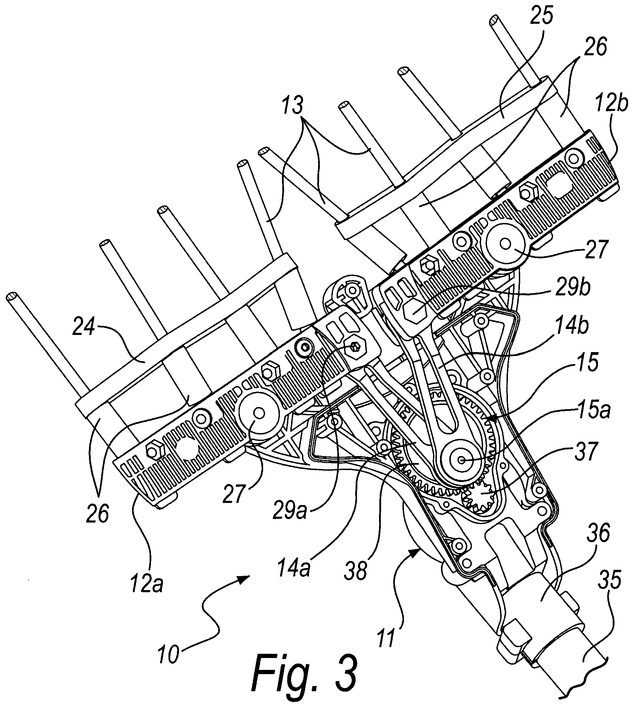

Figure 3 is a partial perspective view of the beating apparatus according to the invention;

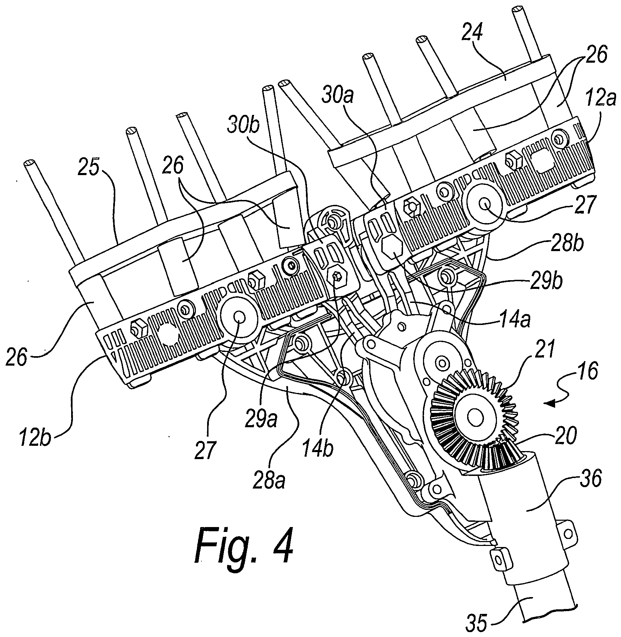

Figure 4 is a partial perspective view of a beating apparatus according to the invention;

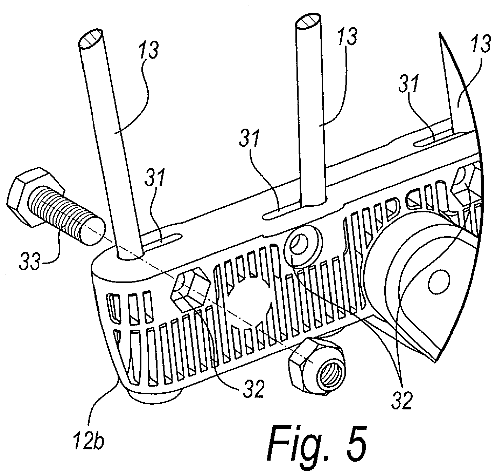

Figure 5 is an enlarged-scale perspective view of a detail of a beating apparatus according to the invention.

It is noted that anything found to be already known during the patenting process is understood not to be claimed and to be the subject of a disclaimer.

With reference to the cited figures, the reference numeral 10 generally designates a beating apparatus, particularly for beating olives and the like, which comprises a supporting body 11 to which two oscillating sectors 12a, 12b provided with beating rods 13 are pivoted.

According to the invention, a beating apparatus 10 furthermore comprises two linkages 14a, 14b which functionally connect a crank element 15 to the oscillating sectors 12a, 12b so as to impart thereto, during use, an oscillating motion.

The crank element 15 is connected, by means of a mechanical transmission 16, to a universal connector 17 for mating with a provided complementary connection part 18, which is connected to an actuation motor 19.

The mechanical transmission 16 is conveniently supported by the supporting body 11.

In general, depending on the contingent requirements, a beating apparatus according to the invention has at least one oscillating sector, which is pivoted to the supporting body and, correspondingly, at least one linkage which interconnects said at least one oscillating sector to the crank element.

Advantageously, the mechanical transmission 16 is gear-based and comprises a bevel gear pair system constituted by a first bevel gear 20, which is jointly connected to the connector 17 so as to receive its driving action from it, and a second bevel gear 21, which meshes with the first bevel gear 20 so as to transmit said driving action to the crank element 15.

The connector 17 preferably has longitudinal ribs 22, whereas the complementary part 18 has a hole with longitudinal slots, not shown in the accompanying figures, which correspond to the longitudinal ribs 22 for the mating of the connector 17 with the complementary part 18 along a common coupling axis A.

The connector 17 is conveniently connected jointly and coaxially to the first bevel gear 20.

Advantageously, the motor 19 is a motor of a brush cutter, the complementary part 18 being keyed to the free end of a transmission shaft 23 actuated by the motor 19.

In particular, the apparatus 10 conveniently also comprises
- a first elastic element 24 and a second elastic element 25, preferably made of elastomeric material, for mutual connection of the rods 13 respectively in a first group 13a and in a second group 13b, which are supported correspondingly by the first oscillating sector 12a and by the second oscillating sector 12b, the elastic elements 24 and 25 being fitted on the rods 13 proximate to their ends for connection to the respective oscillating sectors 12a and 12b,
- elastic spacers 26, conveniently made of elastomeric material, which are fitted on the rods 13 and are interposed between the elastic elements 24, 25 and the corresponding oscillating sectors 12a, 12b.

Advantageously, the spacers 26 are integral with the elastic elements 24 and 25; however, in alternative embodiments of the invention which are substantially equivalent they can be components which are separate from the elastic elements.

In general, depending on the constructive requirements of the invention, a beating apparatus can comprise at least one of said elastic elements that connects between them at least one group of the rods 13.

Advantageously, the crank element 15 is provided with an eccentric pivot 15a which is coupled rotatably simultaneously to an end of the first linkage 14a and to an end of the second linkage 14b, said linkages being respectively connected rotatably, at their other ends, to the first oscillating sector 12a and to the second oscillating sector 12b so as to define a kinematic structure for the actuation of mutually offset oscillations of the oscillating sectors 12a and 12b.

More particularly, the first oscillating sector 12a and the second oscillating sector 12b are pivoted by means of corresponding fulcrums 27 to arms 28a and 28b of the supporting body 11, which is fork-shaped.

Conveniently, the first linkage 14a and the second linkage 14b are functionally connected, by means of corresponding articulation pivots 29a and 29b, respectively to the corresponding oscillating sectors 12a, 12b, substantially at first longitudinal ends thereof, designated by the reference numerals 30a and 30b respectively.

Preferably, the oscillating sectors 14a, 14b have insertion holes 31 for an end of the rods 13 and seats 32 for screws 33 for constricting the holes 31, which are provided transversely to them.

In this manner, during use, the ends of the rods 13 are inserted in the holes 31 and locked thereat by tightening of the screws 33 in the seats 32 that constrict the holes 31.

The rods 13 are thus fixed to the oscillating sectors 12a and 12b by means of a mechanical coupling which is quick and easy to provide and more effective than the coupling by means of adhesives currently used to fix the rods to the supports of known beating devices.

The use of an apparatus 10 according to the invention is as follows.

In order to use the apparatus 10, the operator connects it for example to the actuation assembly of a bush cutter.

Said actuation assembly is composed of the motor 19, a device 34 for driving it and a stem 35 which accommodates the transmission shaft 23 at the free end of which the complementary part 18 is provided.

Thus, the operator engages the connector 17 in the complementary part 18, locking the supporting body 11 to the stem 35, a coupling device 36 being provided advantageously for this purpose, for example of the type of bayonet couplings, and being adapted to integrally connect the supporting body 11 to the stem 35.

When the operator actuates the motor 19 by means of the driving device 34, the transmission shaft 23 actuates, by means of the connector 17, the mechanical transmission 16 that transmits the actuation motion to the crank element 15.

More particularly, the mechanical transmission 16 conveniently also comprises a pinion 37 which is integral with the second bevel gear 21 and meshes with a gear 38, which is pivoted to the supporting body, and supports the eccentric pivot 15a, providing the crank element 15.

The apparatus 10 can then be connected, by mating of the connector 17 with a corresponding provided complementary part, to the motor available to the operator, be it of the internal combustion or electric or pneumatic or hydraulic type, according to the contingent requirements.

In practice it has been found that the invention achieves the intended aim and objects, providing a beating apparatus that is structurally simpler and more compact than currently known beating devices; it in fact lacks an integrated actuation motor but can instead be associated with a motor device provided with the complementary part adapted to receive the connector of the apparatus.

Thus, in particular, an apparatus according to the invention can be associated with a motor device even if the motor device is not expressly dedicated to said apparatus, such as for example the motor device of a bush cutter.

Moreover, a beating apparatus according to the invention makes it possible to provide a synergy of components with other tools commonly used in the field of agricultural and forestry activities, and likewise indeed it is possible to provide a single actuation device equipped with the complementary connection part for mating with the connector of the beating apparatus according to the invention, furthermore providing a working head of a bush cutter equipped with a similar connector for being connected alternatively to the actuation device with respect to the beating apparatus.

Moreover, a beating apparatus according to the invention is safer in operation for operators thanks to the provision of the elastic elements that interconnect the rods and of the elastic spacers that are interposed between said elements and the oscillating sectors.

Such elements in fact mutually retain the rods, distributing among them the stresses to which they are subjected during use, so as to contrast the concentrations of stresses on a single rod and causing instead a joint bearing of these stresses among all the rods connected by them.

In this manner, a beating apparatus according to the invention effectively contrasts the breakage of the rods at their ends for connection to the oscillating sectors and furthermore reduces risks for the operator, since it retains to the other rods any rod that might break, thus allowing the operator to stop the device for actuating the beating apparatus and to replace or remove the broken rod.

The invention thus conceived is susceptible of numerous modifications and variations, all of which are within the scope of the appended claims; all the details may furthermore be replaced with other technically equivalent elements.

In practice, the materials used, as long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A beating apparatus (10), particularly for beating olives and the like, comprising a supporting body (11) to which at least one oscillating sector (12a, 12b) provided with beating rods (13) is pivoted, at least one linkage (14a, 14b) which functionally connects a crank element (15) to said at least one oscillating sector (12a, 12b) so as to impart thereto, during use, an oscillating motion, said crank element (15) being connected, by means of a mechanical transmission (16), to a connector (17) for mating with a provided complementary connection part (18), which is connected to an actuation motor (19), **characterized in that** said at least one oscillating sector (12a, 12b) comprises a first oscillating sector (12a) and a second oscillating sector (12b), said at least one linkage (14a, 14b) comprising a first separate linkage (14a), which functionally connects said first oscillating sector (12a) to said crank element (15), and a second separate linkage (14b), which functionally connects said second oscillating sector (12b) to said crank element (15), said crank element (15) being equipped with an eccentric pivot (15a), which is coupled rotatably to said first linkage (14a) and to said second linkage (14b), so as to define a kinematic structure for the actuation of mutually offset oscillations of said oscillating sectors (12a, 12b), said first and second linkages (14a, 14b) being each dedicated to a respective oscillating sector (12a, 12b).

2. The beating apparatus according to claim 1, **characterized in that** said mechanical transmission (16) is gear-based and comprises a bevel gear pair system constituted by a first bevel gear (20), which is jointly connected to said connector (17) to receive its driving action from it, and a second bevel gear (21), which meshes with said first bevel gear (20) to transmit said driving action to said crank element (15).

3. The beating apparatus according to one or more of the preceding claims, **characterized in that** said connector (17) has longitudinal ribs (22), said complementary part (18) having a hole with longitudinal slots that correspond to said longitudinal ribs (22) for the mating of said connector (17) with said complementary part (18) along a common coupling axis (A).

4. The beating apparatus according to claims 2 and 3, **characterized in that** said connector (17) is connected jointly and coaxially to said first bevel gear (20).

5. The beating apparatus according to one or more of the preceding claims, **characterized in that** said motor (19) is a motor of a bush cutter, said complementary connection part (18) being keyed to the free end of a transmission shaft (23) actuated by said motor (19).

6. The beating apparatus according to one or more of the preceding claims, **characterized in that** it comprises
- at least one elastic element (24, 25) for mutual connection of said rods (13), which is fitted on them proximate to their ends for connection to said at least one oscillating sector (12a, 12b),
- elastic spacers (26), which during use are fitted on said rods (13) and are interposed between said at least one elastic element (24, 25) and said at least one oscillating sector (12a, 12b).

7. The beating apparatus according to one or more of the preceding claims, **characterized in that** said first oscillating sector (12a) and said second oscillating sector (12b) are pivoted by means of corresponding fulcrums (27) to arms (28a, 28b) of said supporting body (11), which is fork-shaped, said first linkage (14a) and said second linkage (14b) being functionally connected, by means of corresponding articulation pivots (29), to the respective oscillating sectors (12a, 12b), substantially at first longitudinal ends (30a, 30b) thereof.

8. The beating apparatus according to claims 6 and 7, **characterized in that** said spacers (26) are integral with said at least one elastic element (24, 25), said at least one elastic element comprising
- a first elastic element (24), which connects a first group (13a) of said rods (13), which is supported by said first oscillating sector (12a), and
- a second elastic element (25), which connects a second group (13b) of said rods (13), which is supported by said second oscillating sector (12b).

9. The beating apparatus according to one or more of the preceding claims, **characterized in that** said at least one oscillating sector (14a, 14b) has insertion holes (31) for an end of said rods (13) and seats (32) for screws (33) for constricting said holes (31), which are provided transversely to them.

## Patentansprüche

1. Eine Rüttelvorrichtung (10), insbesondere zum Rütteln von Oliven und dergleichen, die einen tragenden Körper (11) umfasst, mit dem mindestens ein oszillierender Abschnitt (12a, 12b), ausgestattet mit Rüttelstäben (13), gelenkig verbunden ist, mindestens ein Verbindungselement (14a, 14b), das ein Kurbelelement (15) funktionell mit dem mindestens einen oszillierenden Abschnitt (12a, 12b) verbindet, um ihm im Gebrauch eine oszillierende Bewegung zu verleihen, wobei das Kurbelelement (15) über eine mechanisches Übertragung (16) mit einem Verbindungselement (17) zur Verbindung mit einem bereitgestellten komplementären Verbindungsteil (18) verbunden ist, welches mit einem Antriebsmotor (19) verbunden ist, **dadurch gekennzeichnet, dass** der mindestens eine oszillierende Abschnitt (12a, 12b) einen ersten oszillierenden Abschnitt (12a) und einen zweiten oszillierenden Abschnitt (12b) umfasst, wobei das mindestens eine Verbindungselement (14a, 14b) ein erstes separates Verbindungselement (14a) umfasst, das den ersten oszillierenden Abschnitt (12a) funktionell mit dem Kurbelelement (15) verbindet, und ein zweites separates Verbindungselement (14b), das den zweiten oszillierenden Abschnitt (12b) funktionell mit dem Kurbelelement (15) verbindet, wobei das Kurbelelement (15) mit einem Exzenterzapfen (15a) ausgestattet ist, der drehbar mit dem ersten Verbindungselement (14a) und mit dem zweiten Verbindungselement (14b) gekoppelt ist, um eine kinematische Struktur zur Betätigung zueinander versetzter Schwingungen der oszillierenden Abschnitte (12a, 12b) zu bestimmen, wobei das erste und das zweite Verbindungselement (14a, 14b) jeweils für einen entsprechenden oszillierenden Abschnitt (12a, 12b) reserviert sind.

2. Die Rüttelvorrichtung gemäß Anspruch 1, **dadurch gekennzeichnet, dass** die mechanische Übertragung (16) auf einem Getriebe basiert und ein Kegelräderpaarsystem umfasst, das aus einem ersten Kegelrad (20), welches fest mit dem Verbindungselement (17) verbunden ist, um seine Antriebswirkung von ihm zu erhalten, und einem zweiten Kegelrad (21) besteht, welches in das erste Kegelrad (20) eingreift, um die Antriebswirkung auf das Kurbelelement (15) zu übertragen.

3. Die Rüttelvorrichtung gemäß einem oder mehreren der obigen Ansprüche, **dadurch gekennzeichnet, dass** das Verbindungselement (17) Längsrippen (22) hat, wobei der komplementäre Teil (18) eine Bohrung mit Längsschlitzen hat, die den Längsrippen (22) entsprechen, zum Zwecke der Kopplung des Verbindungselements (17) mit dem komplementären Teil (18) entlang einer gemeinsamen Kopplungsachse (A).

4. Die Rüttelvorrichtung gemäß den Ansprüchen 2 und 3, **dadurch gekennzeichnet, dass** das Verbindungselement (17) fest und koaxial mit dem ersten Kegelrad (20) verbunden ist.

5. Die Rüttelvorrichtung gemäß einem oder mehreren der obigen Ansprüche, **dadurch gekennzeichnet, dass** der Motor (19) ein Motor eines Buschschneiders ist, wobei das komplementäre Verbindungsteil (18) mit dem freien Ende einer von dem Motor (19) angetriebenen Übertragungswelle (23) verkeilt ist.

6. Die Rüttelvorrichtung gemäß einem oder mehreren der obigen Ansprüche, **dadurch gekennzeichnet, dass** sie Folgendes umfasst:
- mindestens ein elastisches Element (24, 25) zur Verbindung der Stäbe (13) miteinander, das auf sie nahe ihren Enden zur Verbindung mit dem mindestens einen oszillierenden Abschnitt (12a, 12b) montiert ist,
- elastische Abstandselemente (26), die im Gebrauch auf die Stäbe (13) aufgesetzt und zwischen dem mindestens einen elastischen Element (24, 25) und dem mindestens einen oszillierenden Abschnitt (12a, 12b) angeordnet sind.

7. Die Rüttelvorrichtung gemäß einem oder mehreren der obigen Ansprüche, **dadurch gekennzeichnet, dass** der erste oszillierende Abschnitt (12a) und der zweite oszillierende Abschnitt (12b) mit Hilfe entsprechender Hebelstützen (27) drehgelenkig mit Armen (28a, 28b) des tragenden Körpers (11) verbunden sind, der gabelförmig ist, wobei das erste Verbindungselement (14a) und das zweite Verbindungselement (14b) über entsprechende Gelenkzapfen (29) mit den jeweiligen oszillierenden Abschnitten (12a, 12b), im Wesentlichen an ersten Längsenden (30a, 30b) derselben, funktionell verbunden sind.

8. Die Rüttelvorrichtung gemäß den Ansprüchen 6 und 7, **dadurch gekennzeichnet, dass** die Abstandselemente (26) integral mit dem mindestens einen elastischen Element (24, 25) sind, wobei das mindestens eine elastische Element Folgendes umfasst:
- ein erstes elastisches Element (24), das eine erste Gruppe (13a) der Stäbe (13) verbindet, das von dem ersten oszillierenden Abschnitt (12a) getragen wird, und
- ein zweites elastisches Element (25), das eine zweite Gruppe (13b) der Stäbe (13) verbindet, das von dem zweiten oszillierenden Abschnitt (12b) getragen wird.

9. Die Rüttelvorrichtung gemäß einem oder mehreren der obigen Ansprüche, **dadurch gekennzeichnet, dass** der mindestens eine oszillierende Abschnitt (14a, 14b) Einführbohrungen (31) für ein Ende der Stangen (13) und Sitze (32) für Schrauben (33) zum Einengen der Bohrungen (31) hat, die quer zu ihnen angebracht sind.

## Revendications

1. Appareil de battage (10), en particulier pour battre des olives, et analogues, comprenant un corps de support (11) sur lequel pivote au moins un secteur oscillant (12a, 12b) muni de tiges de battage (13), au moins une liaison (14a, 14b) qui relie de façon fonctionnelle un élément de manivelle (15) audit secteur oscillant au nombre d'au moins un (12a, 12b) de façon à communiquer à celui-ci, lors de l'utilisation, un mouvement oscillant, ledit élément de manivelle (15) étant relié, à l'aide d'une transmission mécanique (16), à un raccord (17) pour l'accouplement avec une partie de liaison disposée de façon complémentaire (18), qui est reliée à un moteur d'actionnement (19), **caractérisé en ce que** ledit secteur oscillant au nombre d'au moins un (12a, 12b) comprend un premier secteur oscillant (12a) et un deuxième secteur oscillant (12b), ladite liaison au nombre d'au moins une (14a, 14b) comprenant une première liaison séparée (14a), qui relie de façon fonctionnelle ledit premier secteur oscillant (12a) audit élément de manivelle (15), et une deuxième liaison séparée (14b), qui relie de façon fonctionnelle ledit deuxième secteur oscillant (12b) audit élément de manivelle (15), ledit élément de manivelle (15) étant équipé d'un pivot excentrique (15a), qui est couplé de façon rotative à ladite première liaison (14a) et à ladite deuxième liaison (14b), de façon à définir une structure cinématique pour l'actionnement d'oscillations mutuellement décalées desdits secteurs oscillants (12a, 12b), lesdites première et deuxième liaisons (14a, 14b) étant chacune affectées à un secteur oscillant respectif (12a, 12b).

2. Appareil de battage selon la revendication 1, **caractérisé en ce que** ladite transmission mécanique (16) est basée sur des engrenages et comprend un système de paire d'engrenages coniques constitué par un premier engrenage conique (20), qui est relié conjointement audit raccord (17) pour recevoir son action d'entraînement à partir de celui-ci, et un deuxième engrenage conique (21), qui s'engrène avec ledit premier engrenage conique (20) de façon à transmettre ladite action d'entraînement audit élément de manivelle (15).

3. Appareil de battage selon l'une ou plusieurs des revendications précédentes, **caractérisé en ce que** ledit raccord (17) comporte des nervures longitudinales (22), ladite partie complémentaire (18) comportant un trou avec des fentes longitudinales qui correspondent auxdites nervures longitudinales (22) pour l'accouplement dudit raccord (17) à ladite partie complémentaire (18) le long d'un axe de couplage commun (A).

4. Appareil de battage selon les revendications 2 et 3, **caractérisé en ce que** ledit raccord (17) est relié conjointement et de façon coaxiale audit premier engrenage conique (20).

5. Appareil de battage selon l'une ou plusieurs des revendications précédentes, **caractérisé en ce que** ledit moteur (19) est un moteur d'une débroussailleuse, ladite partie de liaison complémentaire (18) étant clavetée à l'extrémité libre d'un arbre de transmission (23) actionné par ledit moteur (19).

6. Appareil de battage selon l'une ou plusieurs des revendications précédentes, **caractérisé en ce qu'**il comprend :
- au moins un élément élastique (24, 25) pour la liaison mutuelle desdites tiges (13), qui est disposé sur celles-ci à proximité de leurs extrémités pour la liaison avec ledit secteur oscillant au nombre d'au moins un (12a, 12b),
- des éléments d'espacement élastiques (26), qui, lors de l'utilisation, sont disposés sur lesdites tiges (13), et qui sont interposés entre ledit élément élastique au nombre d'un moins un (24, 25) et ledit secteur oscillant au nombre d'au moins un (12a, 12b).

7. Appareil de battage selon l'une ou plusieurs des revendications précédentes, **caractérisé en ce que** ledit premier secteur oscillant (12a) et ledit deuxième secteur oscillant (12b) pivotent grâce à des points d'appui correspondants (27) sur des bras (28a, 28b) dudit corps de support (11), qui est en forme de fourche, ladite première liaison (14a) et ladite deuxième liaison (14b) étant reliées de façon fonctionnelle, à l'aide de pivots d'articulation correspondants (29), aux secteurs oscillants respectifs (12a, 12b), sensiblement à des premières extrémités longitudinales (30a, 30b) de ceux-ci.

8. Appareil de battage selon les revendications 6 et 7, **caractérisé en ce que** lesdits éléments d'espacement (26) sont intégrés audit élément élastique au nombre d'au moins un (24, 25), ledit élément élastique au nombre d'au moins un comprenant :
- un premier élément élastique (24), qui relie un premier groupe (13a) desdites tiges (13), qui est supporté par ledit premier secteur oscillant (12a), et
- un deuxième élément élastique (25), qui relie un deuxième groupe (13b) desdites tiges (13), qui est supporté par ledit deuxième secteur oscillant (12b).

9. Appareil de battage selon l'une ou plusieurs des revendications précédentes, **caractérisé en ce que** ledit secteur oscillant au nombre d'au moins un (14a, 14b) comporte des trous d'insertion (31) pour une extrémité desdites tiges (13) et des sièges (32) pour des vis (33) pour serrer lesdits trous (31), qui sont disposés transversalement à ceux-ci.
